# EUROPEAN PATENT APPLICATION

(11) **EP 4 197 817 A1**
(43) Date of publication of application: **21.06.2023**
(21) Application number: 22212417.4
(22) Date of filing: 09.12.2022
(51) Int. Cl.: B60C 11/03, B60C 11/12, B60C 11/13

(54) **WINTER TIRE TREAD PATTERN**

(30) Priority: 17.12.2021 US 202117553895
(71) Applicant: The Goodyear Tire & Rubber Company, Akron, OH 44316 (US)
(72) Inventor: SKURICH, Michael Stefan, Canton, 44718 (US); JUERGENS, Zachary William, Canton, 44708 (US); CRANO, Michael Richard, Wadsworth, 44281 (US); WIELAND, Richard Mark, Akron, 44312 (US); WEN, Ben Baicheng, Twinsburg, 44087 (US); KANTURA, John Joseph, Chagrin Falls, 44023 (US)
(74) Representative: Kutsch, Bernd

(57) **Abstract**

A tread for a tire (10) and a respective tire (10) is disclosed. The tread (12) comprises a circumferential center tread region (14) comprising a plurality of block elements (28) arranged in a preferably symmetric pattern on opposite sides of a tire equatorial center plane (20); a pair of circumferential shoulder tread regions (16, 18) each comprising a plurality of block elements (26) arranged in a preferably symmetric pattern on opposite sides of a tire equatorial center plane (20); a leading edge first construction (502, 602) disposed on a leading edge of at least one of the block elements (26, 28), said leading edge first construction (502, 602) being a serrated or otherwise periodically structured construction; and a trailing edge second construction (501, 601) disposed on a trailing edge of at least one of the block elements (26, 28), said trailing edge second construction (501, 601) being a serrated or otherwise periodically structured construction.

## Description

### Field of the Invention

The present invention relates generally to vehicle tires and, more specifically, to a tread pattern for all season and winter tires.

### Background of the Invention

Tires constructed for all season and winter driving conditions are intended to be suitable for running on surfaces of reduced compactness such as snow-covered roadways. Such tires are required to demonstrate suitable traction (gripping), power, braking, and handling characteristics while demonstrating good dry road, wear, and noise level performance. The tread pattern of winter tires must meet such competing objectives in order to provide the user with acceptable tire performance.

### Summary of the Invention

The invention relates to a tire tread in accordance with claim 1 and to a tire in accordance with claim 12.

Dependent claims refer to preferred embodiments of the invention.

The tread comprises a circumferential center tread region comprising a plurality of block elements arranged in a preferably symmetric pattern on opposite sides of a tire equatorial center plane; a pair of circumferential shoulder tread regions each comprising a plurality of block elements arranged in a preferably symmetric pattern on opposite sides of a tire equatorial center plane; a leading edge first construction disposed on a leading edge of at least one of the block elements, said leading edge first construction being a serrated or otherwise periodically structured construction; and a trailing edge second construction disposed on a trailing edge of at least one of the block elements, said trailing edge second construction being a serrated or otherwise periodically structured construction.

A first preferred tread for a tire, in accordance with the present invention, includes a circumferential center tread region comprising a plurality of block elements arranged in a symmetric pattern on opposite sides of a tire equatorial centerplane, a pair of circumferential shoulder tread regions each comprising a plurality of block elements arranged in a symmetric pattern on opposite sides of a tire equatorial centerplane, a leading edge first serrated construction disposed on a leading edge of one of the block elements, and a trailing edge second serrated construction disposed on a trailing edge of one of the block elements.

According to a preferred of the invention, the leading edge first serrated construction extends across the center tread region.

According to a preferred of the invention, the leading edge first serrated construction extends across a shoulder tread region.

According to a preferred of the invention, the leading edge first serrated construction extends across both the center tread region and the shoulder tread regions.

According to a preferred of the invention, the leading edge first serrated construction includes an array of planar ramps extending circumferentially in a direction of rotation of the tire.

According to a preferred of the invention, the trailing edge second serrated construction extends across the center tread region.

According to a preferred of the invention, the trailing edge second serrated construction extends across a shoulder tread region.

According to a preferred of the invention, the trailing edge second serrated construction extends across both the center tread region and the shoulder tread regions.

According to a preferred of the invention, the trailing edge second serrated construction includes an array of curved convex domes extending circumferentially in a direction of rotation of the tire.

According to a preferred of the invention, the trailing edge second serrated construction includes a curved convex dome extending circumferentially in a direction of rotation of the tire.

A second preferred tread for a tire, in accordance with the present invention, includes a circumferential center tread region comprising a plurality of block elements arranged in a symmetric pattern on opposite sides of a tire equatorial centerplane, a pair of circumferential shoulder tread regions each comprising a plurality of block elements arranged in a symmetric pattern on opposite sides of a tire equatorial centerplane, a leading edge first construction disposed on a leading edge of one of the block elements, and a trailing edge second construction disposed on a trailing edge of one of the block elements.

### Definitions

"Aspect ratio" of the tire means the ratio of its section height (SH) to its section width (SW) multiplied by 100 percent for expression as a percentage.

"Asymmetric tread" means a tread that has a tread pattern not symmetrical about the center plane or equatorial plane EP of the tire.

"Axial" and "axially" means lines or directions that are parallel to the axis of rotation of the tire.

"Circumferential" means lines or directions extending along the perimeter of the surface of the annular tread perpendicular to the axial direction.

"Equatorial center plane (CP)" means the plane perpendicular to the tire's axis of rotation and passing through the center of the tread.

"Footprint" means the contact patch or area of contact of the tire tread with a flat surface at zero speed and under normal load and pressure.

"Groove" means an elongated void area in a tread that may extend circumferentially or laterally about the tread in a straight, curved, or zigzag manner. Circumferentially and laterally extending grooves sometimes have common portions. The "groove width" is equal to tread surface area occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such narrow or wide grooves are substantially reduced depth as compared to wide circumferential grooves which the interconnect, they are regarded as forming "tie bars" tending to maintain a rib-like character in tread region involved.

"Inboard side" means the side of the tire nearest the vehicle when the tire is mounted on a wheel and the wheel is mounted on the vehicle.

"Lateral" means an axial direction.

"Lateral edges" means a line tangent to the axially outermost tread contact patch or footprint as measured under normal load and tire inflation, the lines being parallel to the equatorial centerplane.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Sipe" means small slots molded into the tread elements of the tire that subdivide the tread surface and improve traction, sipes are generally narrow in width and close in the tires footprint as opposed to grooves that remain open in the tire's footprint.

"Tread element" or "traction element" means a rib or a block element defined by having a shape adjacent grooves.

"Tread Arc Width" means the arc length of the tread as measured between the lateral edges of the tread.

### Brief Description of the Drawings

The present invention will be described by way of example, and with reference to, the accompanying drawings, in which:
FIG. 1 is a schematic perspective view of a tire for use with the present invention.
FIG. 2 is a schematic plan view of the tire of FIG. 1.
FIG. 3 is a schematic perspective view of part of the tire of FIG. I .
FIG. 4 is a schematic enlarged perspective view of a tread portion in accordance with the present invention.
FIG. 5 is another schematic enlarged perspective view of a tread portion in accordance with the present invention.

Repeated use of reference characters in the present specification and drawings is intended to represent the same or analogous features or elements of the present invention.

### Detailed Description of Preferred Embodiments of the Invention

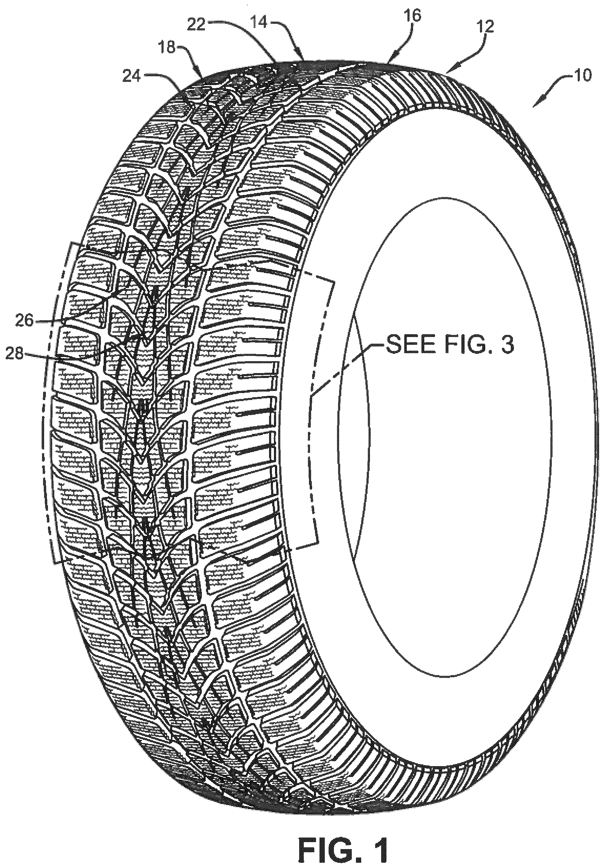

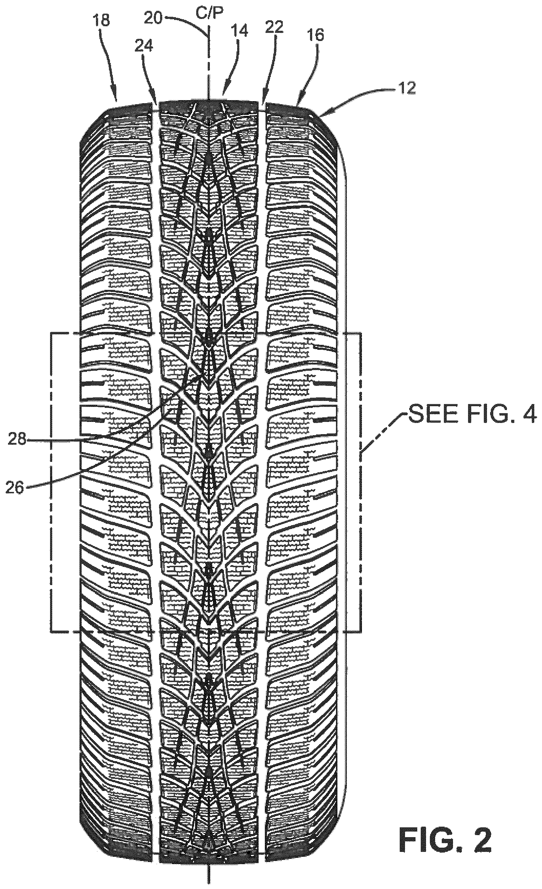

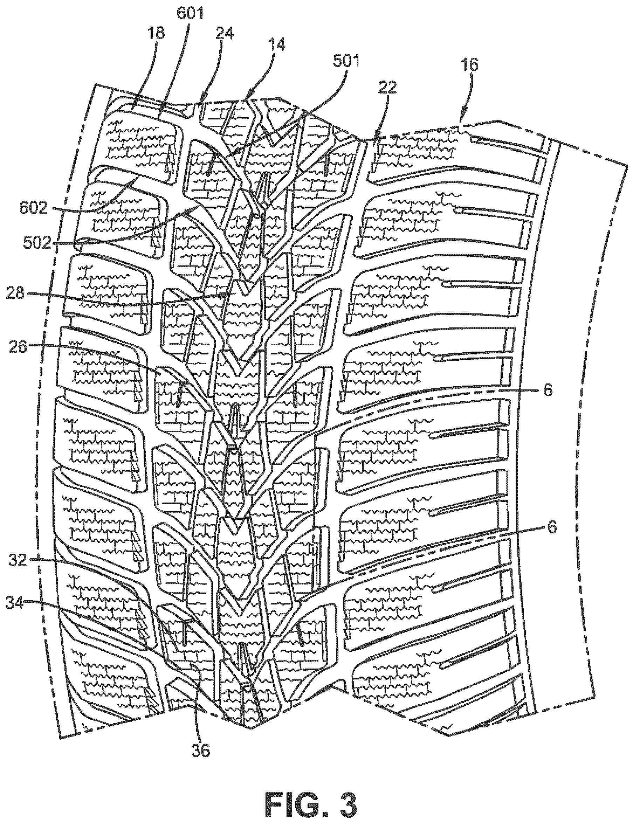

With reference to FIGS. 1 through 4, an example tire 10 for use with the present invention has a circumferential tread 12. The tread 12 includes a circumferential center tread region 14 and two shoulder tread regions 16, 18 on axially opposite sides of the center tread region 14. A tire equatorial center plane 20 may divide the tread 12 into two symmetrical halves. A pair of circumferential grooves 22, 24 may define the center tread region 14, separating the center region from opposite shoulder tread regions 16, 18.

In the symmetrical pattern of the tread 12, the center region 14 includes off-center block elements 26 of sundry geometric shapes on opposite sides of the center plane 20. The outer off-center block elements 26 have a groove-facing side 27 that borders a respective circumferential groove 22 or 24. The center region 14 further includes interior on-center block elements 28 of sundry geometric configuration located generally on the circumferential center plane 20. Some or all of the center region block elements 26, 28, may include selective on-center blocks 28 and off-center blocks 26, including multiple sinusoidal or wavy sipes 30 that run in a mutually spaced apart and parallel orientation laterally across a respective block element 26, 28.

The sipes 30 may be generally of a wavy, undulating, and/or sinusoidal configuration having a variable depth in the lengthwise direction that varies from deeper recessed sipe portions to sipe portions that are not recessed, as will be explained below. Adjacent pairs of laterally extending wavy sipes 32, referred for illustration generally as sipes 32, 34, may be interconnected by one or more circumferentially extending notches 36. The notches 36 may generally have a linear straight-side constant depth configuration, extending circumferentially to interconnect a pair of adjacent wavy sipes at a medial sipe intersection location.

The shoulder tread regions 16, 18 are formed by block elements 38 having an axially inward facing side 40 adjoining a respective circumferential tread groove 22, 24. The shoulder block elements 38 may include multiple sinusoidal or wavy sipes 42, 44 configured similarly to the sipes 30 of the center region 14. The shoulder sipes 42, 44 likewise may run in a mutually spaced apart and parallel orientation laterally across a respective shoulder block element and have a variable depth in the lengthwise direction that varies from deeper recessed sipe portions to sipe portions that are not recessed. The adjacent wavy sipes 42, 44 may be interconnected by one or more circumferentially extending notches 46. The notches 46 may generally have a linear straight-side constant depth configuration, extending circumferentially to interconnect a pair of adjacent wavy sipes at a medial sipe intersection location.

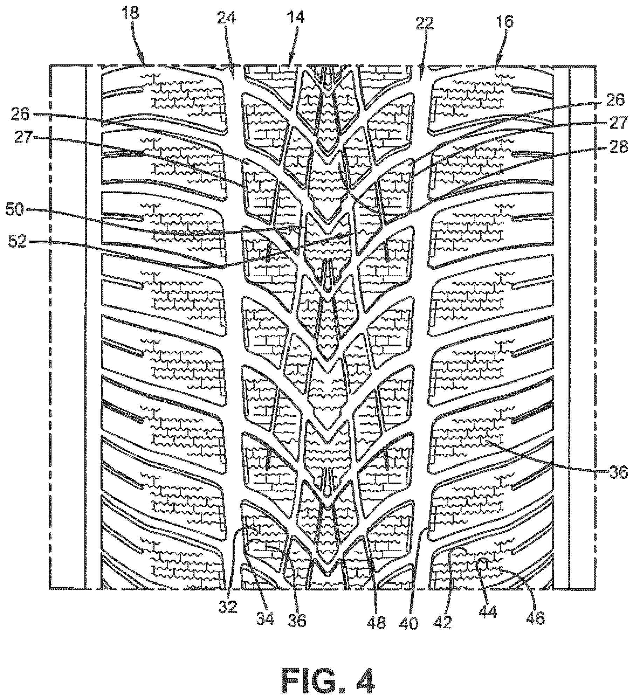

Referring to FIG. 4, the tread 12 further includes a circumferential array of spaced apart first V-grooves on the tread center plane 20. Each of the first V-grooves may include a divergent first groove arm 50 and a second groove arm 52 . Each of the groove arms 50, 52 may have a vertex segment, a medial segment, and a terminal segment. The groove arms 50, 52 may vary width and depth from the vertex segment to the medial segment to the terminal segment. The depth of the groove arms 50, 52 may be shallowest at the segments and deepest at the medial segment. The width of the groove arms 50, 52 may be narrowest at the segments and widest at the medial segment. The ends of the groove arms 50, 52 may converge, but not meet in the vertex region of each arm.

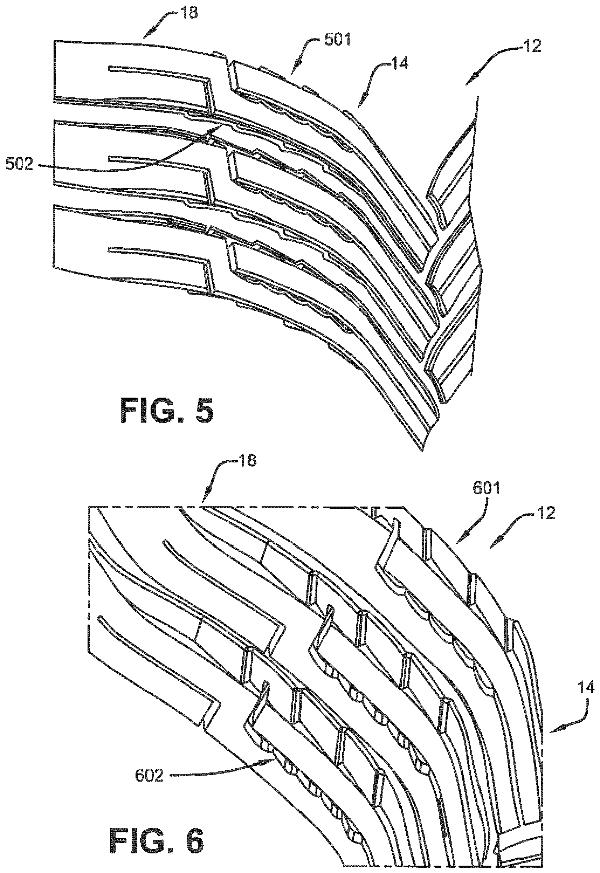

As shown in FIG. 5, a tread 12 in accordance with an embodiment of the present invention includes a leading edge first serrated construction 502 for improving wear and also capturing/retaining snow for greater shear column and shear frictional force aiding winter traction and handling. The leading edge first serrated construction 502 preferably extends across both the center region 14 and the shoulder regions 16, 18. The leading edge first serrated construction 502 preferably comprises an array of planar ramps extending into the groove and thus oncoming snow (FIG. 5). The tread 12 further includes a trailing edge second serrated construction 501 for improving wear, capturing/retaining snow for greater shear column and shear frictional force aiding winter traction and handling. The trailing edge second serrated construction 501 preferably extends across both the center region 14 and the shoulder regions 16, 18. The trailing edge second serrated construction 501 preferably comprises an array of planar ramps extending into the block and away from the oncoming snow (FIG. 5).

The leading edge second serrated construction 502 is preferably angled out into the associated groove to reinforce/buttress and stiffen the leading edge thereby optimizing wear as the leading edge undergoes increased stress as the edge enters into the footprint. The trailing edge second serrated construction 501 further softens the trailing edge such that the construction 501 may cut into the tread block with a zero to minimal wall angle into the associated groove (e.g., undercut into the tread block at a negative angle) to lessen the force on the block edge while slipping/dragging/exiting the footprint.

As shown in FIG. 6, a tread 12 in accordance an embodiment of with the present invention includes a trailing edge first serrated construction 601 for improving wear and also capturing and retaining snow for greater shear force traction. The trailing edge first serrated construction 601 preferably extends across both the center region 14 and the shoulder regions 16, 18. The leading edge first serrated construction 601 preferably comprises an array of planar ramps extending radially outward (FIG. 6). The tread 12 preferably further includes a middle of block second serrated construction 602 for capturing/retaining snow, snow scratching/penetration to improve shear column and shear frictional force enhancing winter traction and handling, and enhancing draining the flow of water. The middle of block second serrated construction 602 preferably extends across both the center region 14 and the shoulder regions 16, 18. The middle of block second serrated construction 602 preferably comprises an array of curved concave scoops or scoop structures facing radially outward (FIG. 6).

The middle of block second serrated construction 602 preferably includes a full depth sipe/blade at the back edge of the scoops, along a straight edge. The scoops or scoop structures may optimize snow retention and keep the blade along the trailing edge open by ramming snow into the blade thereby allowing sipe activation for snow traction. The scoop shape, with the multiple points almost touching the blade at the trailing edge, may maintain the scoop shape and keep the scoops from closing up under deflection/deformation while the tire is rolling.

## Claims

1. A tread for a tire (10), the tread (12) comprising:
a circumferential center tread region (14) comprising a plurality of block elements (28) arranged in a preferably symmetric pattern on opposite sides of a tire equatorial center plane (20);
a pair of circumferential shoulder tread regions (16, 18) each comprising a plurality of block elements (26) arranged in a preferably symmetric pattern on opposite sides of a tire equatorial center plane (20);
a leading edge first construction (502, 602) disposed on a leading edge of at least one of the block elements (26, 28), said leading edge first construction (502, 602) being a serrated or otherwise periodically structured construction; and
a trailing edge second construction (501, 601) disposed on a trailing edge of at least one of the block elements (26, 28), said trailing edge second construction (501, 601) being a serrated or otherwise periodically structured construction.

2. The tread as set forth in claim 1 wherein the leading edge first construction (502, 602) extends across the center tread region (14) and/or wherein the leading edge first construction (502, 602) extends across one or both shoulder tread regions (16, 18).

3. The tread as set forth in at least one of the previous claims wherein the leading edge first construction (502, 602) includes an array of planar ramps extending circumferentially in a direction of rotation of the tire (10).

4. The tread as set forth in at least one of the previous claims wherein the leading edge first construction (502, 602) includes an array of curved convex domes extending circumferentially in a direction of rotation of the tire (10).

5. The tread as set forth in at least one of the previous claims wherein the trailing edge second construction (501, 601) extends across the center tread region (14) and/or wherein the trailing edge second construction (501, 601) extends across one or both shoulder tread regions (16, 18).

6. The tread as set forth in at least one of the previous claims wherein the trailing edge second construction (501, 601) includes an array of curved convex domes extending circumferentially in a direction of rotation of the tire (10) or extending circumferentially opposite the direction of rotation of the tire (10).

7. The tread as set forth in at least one of the previous claims wherein the trailing edge second construction (501, 601) includes an array of planar ramps extending circumferentially in a direction of rotation of the tire (10) or extending circumferentially opposite the direction of rotation of the tire (10).

8. The tread as set forth in at least one of the previous claims wherein the trailing edge second construction (501, 601) comprises an array of curved concave scoops facing radially outward.

9. The tread of claim 8 wherein the trailing edge second construction (501, 601) includes a full depth sipe at a back edge of the scoops, along a straight edge.

10. The tread as set forth in at least one of the previous claims wherein the leading edge first construction (502, 602) comprises an array of curved concave scoops facing radially outward.

11. The tread of claim 10 wherein the leading edge first construction (502, 602) includes a full depth sipe at a back edge of the scoops, along a straight edge.

12. A pneumatic tire having a tread (12) in accordance with at least one of the previous claims.
